# EUROPEAN PATENT APPLICATION

(11) **EP 4 446 922 A1**
(43) Date of publication of application: **16.10.2024**
(21) Application number: 23167572.9
(22) Date of filing: 12.04.2023
(51) Int. Cl.: G06F 21/62, H04L 9/40

(54) **METHOD AND SYSTEM FOR MANAGING ACCESS TO DATA OF DIGITAL TWIN IN INDUSTRIAL SYSTEM**

(71) Applicant: ABB SCHWEIZ AG, 5400 Baden (CH)
(72) Inventor: Y A, Ravishankar, 560066 Bangalore (IN); THANGAVELU, Sukumara, 560068 Bangalore (IN); DHANANJAYA, Bharath, 560037 Bangalore (IN)
(74) Representative: Zimmermann & Partner Patentanwälte mbB

(57) **Abstract**

The present disclosure relates to method and access management system (104) for managing access to data of digital twin in industrial system. One or more datasets of digital twin is received from each of plurality of devices of hierarchical system (101). State of digital twin is determined by mapping each of one or more datasets with pre-defined state data. Information related to role of each of one or more users (103) associated with each of plurality of devices (102) is received. Access matrix indicating one or more users (103) and access rights on one or more datasets is generated by mapping state of digital twin corresponding to each of the one or more datasets with role of each of one or more users (103). Access to one or more datasets by one or more users (103) at each of the plurality of devices (102) is managed based on access matrix.

## Description

### TECHNICAL FIELD

The present disclosure generally relates to digital twin technology. More particularly, the present disclosure relates to a method and a system for managing access to data of a digital twin in an industrial system.

### BACKGROUND

Digital Twin (DT) is a digital representation of a physical device, process, service, environment, and the like. The digital twin is used as a digital counterpart for practical purposes, such as simulation, integration, testing, monitoring, maintenance, and the like. The digital twin can be implemented in one device or multiple devices. Also, the digital twin can be implemented across multiple devices in various levels of hierarchies in an industrial system. For instance, the digital twin is implemented in multiple devices such as field devices, edge devices, and devices associated with a cloud platform, and the like. In such case, data of the digital twin is distributed across multiple devices at various levels. Also, there are multiple users which may access the data of the digital twin stored in such devices.

In conventional systems, any user of the industrial system may access the data of the digital twin stored in the multiple devices. The conventional systems lack the ability to monitor the access to the data of the digital twin. Also, managing the access to the data stored across multiple devices at various levels by users is challenging. The digital twin is associated with multiple states during entire lifecycle of the digital twin such as design state, operation state, maintenance state, and the like. There are various users responsible for different states of the digital twin. The conventional systems lack the ability to monitor the state of the digital twin to manage tasks associated with different states.

The information disclosed in this background of the disclosure section is only for enhancement of understanding of the general background of the invention and should not be taken as an acknowledgement or any form of suggestion that this information forms the prior art already known to a person skilled in the art.

### SUMMARY

In an embodiment, the present disclosure discloses a method of managing an access to data of a digital twin in an industrial system. The method comprises receiving one or more datasets of a digital twin, from each of a plurality of devices of a hierarchical system implementing the digital twin. A state of the digital twin corresponding to each of the one or more datasets is determined by mapping each of the one or more datasets with pre-defined state data. Further, the method comprises receiving information related to a role of each user of one or more users associated with each of the plurality of devices, from one or more sources. Furthermore, the method comprises generating an access matrix indicating the one or more users and corresponding access rights on the one or more datasets associated with each of the plurality of devices, by mapping the state of the digital twin corresponding to each of the one or more datasets with the role of each of the one or more users. Thereafter, the method comprises managing an access to the one or more datasets by the one or more users at each of the plurality of devices, based on the access matrix.

In an embodiment, the one or more datasets comprise at least one of, data related to software components associated with the digital twin, data related to hardware components associated with the digital twin, operational data associated with the digital twin, data related to services associated with digital twin.

In an embodiment, the state of the digital twin comprises at least one of, an under-development state, a productization state, a commissioning state, a validation state, an operation state, a maintenance state, an upgrade state, and an end-of-life state.

In an embodiment, the present disclosure discloses an access management system for managing an access to data of a digital twin in an industrial system. The access management system comprises a processor and a memory. The processor is configured to receive one or more datasets of a digital twin, from each of a plurality of devices of a hierarchical system implementing the digital twin. A state of the digital twin corresponding to each of the one or more datasets is determined by mapping each of the one or more datasets with pre-defined state data. Further, the processor is configured to receive information related to a role of each user of one or more users associated with each of the plurality of devices, from one or more sources. Furthermore, the processor is configured to generate an access matrix indicating the one or more users and corresponding access rights on the one or more datasets associated with each of the plurality of devices, by mapping the state of the digital twin corresponding to each of the one or more datasets with the role of each of the one or more users. Thereafter, the processor is configured to manage an access to the one or more datasets by the one or more users at each of the plurality of devices, based on the access matrix.

As used in this summary, in the description below, in the claims below, and in the accompanying drawings, the term "digital twin" is defined as a digital representation of a physical object, process, service, environment, and the like. The digital twin is used as a digital counterpart for practical purposes, such as simulation, integration, testing, monitoring, maintenance, and the like.

As used in this summary, in the description below, in the claims below, and in the accompanying drawings, the term "at least" followed by a number is used in to denote the start of a range beginning with that number (which may be a range having an upper limit or no upper limit, depending on the variable being defined). For example, "at least one" means one or more than one.

The foregoing summary is illustrative only and is not intended to be in any way limiting. In addition to the illustrative aspects, embodiments, and features described above, further aspects, embodiments, and features will become apparent by reference to the drawings and the following detailed description.

### BRIEF DESCRIPTION OF THE ACCOMPANYING DRAWINGS

The novel features and characteristics of the disclosure are set forth in the appended claims. The disclosure itself, however, as well as a preferred mode of use, further objectives, and advantages thereof, will best be understood by reference to the following detailed description of an illustrative embodiment when read in conjunction with the accompanying figures. One or more embodiments are now described, by way of example only, with reference to the accompanying figures wherein like reference numerals represent like elements and in which:
**Figure 1** illustrates an exemplary environment for managing an access to data of a digital twin in an industrial system, in accordance with some embodiments of the present disclosure;
**Figure 2** illustrates a detailed diagram of an access management system for managing access to the data of the digital twin in the industrial system, in accordance with some embodiments of the present disclosure;
**Figures 3A-3G** and 4A-4C show exemplary illustrations for managing access to the data of the digital twin in the industrial system, in accordance with some embodiments of the present disclosure;
**Figure 5** shows an exemplary flow chart illustrating method steps for managing access to the data of the digital twin in the industrial system, in accordance with some embodiments of the present disclosure; and
**Figure 6** illustrates a block diagram of an exemplary computer system for managing access to the data of the digital twin in the industrial system, in accordance with some embodiments of the present disclosure.

It should be appreciated by those skilled in the art that any block diagram herein represents conceptual views of illustrative systems embodying the principles of the present subject matter. Similarly, it will be appreciated that any flow charts, flow diagrams, state transition diagrams, pseudo code, and the like represent various processes which may be substantially represented in computer readable medium and executed by a computer or processor, whether or not such computer or processor is explicitly shown.

### DETAILED DESCRIPTION

In the present document, the word "exemplary" is used herein to mean "serving as an example, instance, or illustration." Any embodiment or implementation of the present subject matter described herein as "exemplary" is not necessarily to be construed as preferred or advantageous over other embodiments.

While the disclosure is susceptible to various modifications and alternative forms, specific embodiment thereof has been shown by way of example in the drawings and will be described in detail below. It should be understood, however that it is not intended to limit the disclosure to the particular forms disclosed, but on the contrary, the disclosure is to cover all modifications, equivalents, and alternatives falling within the scope of the disclosure.

The terms "comprises", "comprising", or any other variations thereof, are intended to cover a non-exclusive inclusion, such that a setup, device or method that comprises a list of components or steps does not include only those components or steps but may include other components or steps not expressly listed or inherent to such setup or device or method. In other words, one or more elements in a system or apparatus proceeded by "comprises... a" does not, without more constraints, preclude the existence of other elements or additional elements in the system or apparatus.

Digital Twin (DT) is a digital representation of a physical device, process, service, environment, and the like. The digital twin can be implemented in one device or multiple devices. Also, the digital twin can be implemented across multiple devices in various levels of hierarchies in an industrial system, for example, in a Distributed Control System (DCS). For instance, the digital twin is implemented in multiple devices such as field devices, edge devices, cloud devices, and the like. Also, there are multiple users which may access data of the digital twin stored in such devices. Accordingly, the data of the digital twin is distributed across multiple devices at various levels. Conventional systems lack the ability to monitor the access to the data of the digital twin. Also, the conventional systems lack the ability to monitor state of the digital twin to manage tasks associated with different states of the digital twin.

Accordingly, the present disclosure provides a method and a system for managing access to data of a digital twin in an industrial system. In the present disclosure, the system identifies a state of the digital twin associated with datasets stored across devices at various hierarchical levels. Then, the system generates an access matrix by mapping the state of the digital twin with role of multiple users in the industrial system. The access to the data of the digital twin is managed using the access matrix. The present disclosure provides the access to the data of the digital twin to the users based on the role of the users, hence ensuring that only required users access the data. This enhances security of the data of the digital twin. Also, activity log of users indicating access of the users to the data of the digital twin can be maintained. Further, the system provides notifications or task updates related to various states of the digital twin to relevant users based on the role. Hence, the present disclosure provides efficient management of tasks of the digital twin. Thus, the present disclosure provides simplified access management and efficient task management of the digital twin throughout the lifecycle of the digital twin. The present disclosure provides access management and task management tools to users. Such tools map states of the digital twin with roles of the users in the industrial system, and accordingly manage the access to the data of the digital twin.

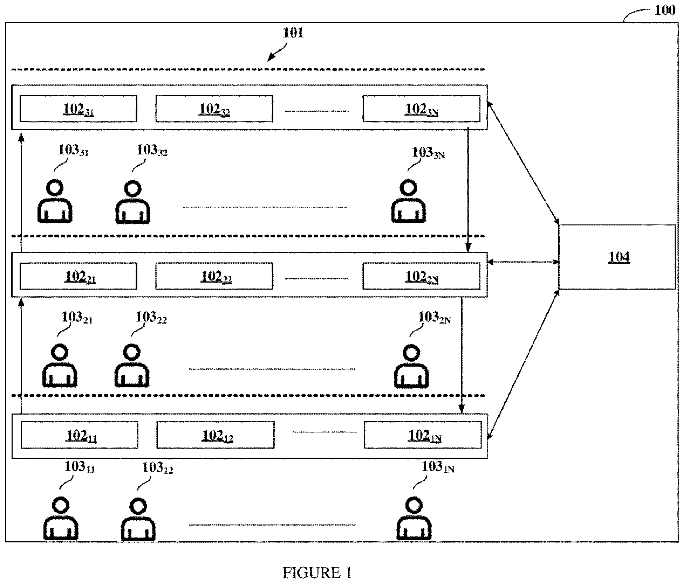

**Figure 1** illustrates an exemplary environment 100 for managing an access to data of a digital twin in an industrial system, in accordance with some embodiments of the present disclosure. The exemplary environment 100 comprises a hierarchical system 101 and an access management system 104. The digital twin is a digital representation of a physical object, process, service, environment, and the like. The digital twin is used as a digital counterpart for practical purposes, such as simulation, integration, testing, monitoring, maintenance, and the like. The digital twin is implemented in the hierarchical system 101. The hierarchical system 101 comprises multiple devices at different levels of hierarchies. For example, the hierarchical system 101 may be implemented in a steel mill industry. In such case, the hierarchical system 101 may include a motor speed controller at field level, a motor speed optimizer for adjusting a number of steel rolls at an edge level, and a factory management service such as an enterprise service or a plant management service at a cloud level. Figure 1 shows an exemplary hierarchical system 101 comprising multiple devices (referred collectively as a plurality of devices 102) at three levels, for instance, field level, edge level, and cloud level. As shown, a first level, a second level, and a third level of the hierarchical system 101 comprises multiple devices (102₁₁, 102₁₂, .........., 102_{1N}), (102₂₁, 102₂₂, .........., 102_{2N}), and (102₃₁, 102₃₂, .........., 102_{3N}), respectively. For example, the first level, the second level, the third level may include field devices, edge devices, and devices implemented in cloud platform, respectively. The devices implemented in the cloud platform may include cloud servers, cloud microservices, and the like, and the term device should not be considered as limiting. The devices at various levels may be managed by one or more users 103 (including users 103₁₁, 103₁₂, .........., 103_{1N} associated with the first level, users 103₂₁, 103₂₂, .........., 103_{2N} associated with the second level, and users 103₃₁, 103₃₂, .........., 103_{3N} associated with the third level). In an example, the one or more users 103 may include operator, designer, and the like. A person skilled in the art will appreciate that users may vary based on a type of the hierarchical system 101. Data associated with the digital twin is distributed across the plurality of devices 102. For instance, sensor data of the industrial system may be stored in the field devices. The sensor data and edge analysis data may be stored in the edge devices. The sensor data, the edge analysis data, and cloud analysis data may be stored in the devices implemented in the cloud platform.

The present disclosure provides the access management system 104 to manage the access to the data of the digital twin in the industrial system. The access management system 104 may be a computing device such as, a laptop computer, a desktop computer, a Personal Computer (PC), a notebook, a smartphone, a tablet, a server, a network server, a cloud-based server, an edge computing device, a processing device, router, and the like. In one implementation, the access management system 104 may be implemented as a standalone system outside the hierarchical system 101 as illustrated in Figure 1. In another implementation, the access management system 104 may be a part of the hierarchical system 101. For example, the access management system 104 may be implemented in one of the plurality of devices 102 of the hierarchical system 101 i.e., the access management system 104 may be implemented at field-level, edge-level, cloud-level, or the like.

The access management system 104 is configured to manage the access to the data of the digital twin in the industrial system. Firstly, the access management system 104 receives data of the digital twin stored at the plurality of devices 102 of the hierarchical system 101. The data includes various datasets stored at each of the plurality of devices 102. For instance, the datasets may include hardware data, software data, and the like, associated with the digital twin. Then, the access management system 104 determines a state of the digital twin corresponding to each of the datasets by mapping the datasets with pre-defined state data. In an example, the pre-defined state data may include historical data mapped with multiple states of the digital twin. For example, the access management system 104 may determine the state of a dataset as an operation data based on values/parameters indicated in the dataset. Further, the access management system 104 may receive information related to a role of each user of the industrial system. The information may be received from various sources for example, a database associated with the industrial system. The access management system 104 system maps the state of the digital twin associated with the datasets with the role of each user. Referring to the above-stated example, the access management system 104 maps operator role with the dataset. The access management system 104 generates an access matrix that indicates the one or more users 103 and access rights of the one or more users 103 to the datasets of the digital twin based on the mapping. Referring to the above-stated example, the access management system 104 generates the access matrix which indicates the operator and corresponding access rights such as, reading and writing the operation data. The access management system 104 manages an access to the one or more datasets by the one or more users 103 at each of the plurality of devices 102, based on the access matrix. Referring to the above-stated example, the operator may have the access rights such as reading and writing the operation data, but not deletion of the operation data. In such case, the access management system 104 denies deletion of the operation data by the operator.

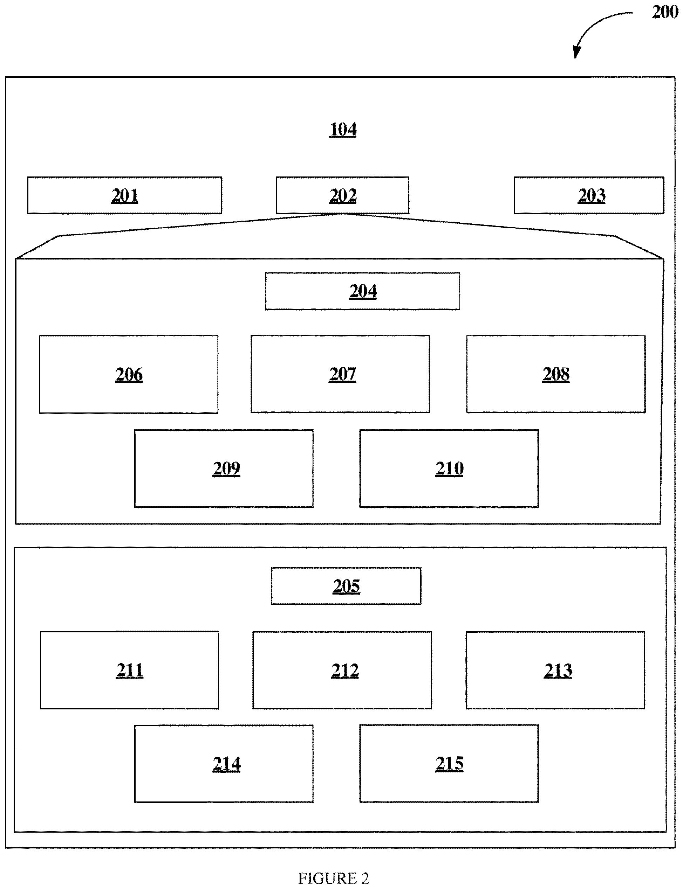

**Figure 2** illustrates a detailed diagram of the access management system 104 for managing access to the data of the digital twin in the industrial system, in accordance with some embodiments of the present disclosure. The access management system 104 comprises an Input/ Output (I/O) interface 201, a memory 202, and a processor 203. In some embodiments, the memory 202 may be communicatively coupled to the processor 203. The memory 202 stores instructions executable by the processor 203. The processor 203 may comprise at least one data processor for executing program components for executing user or system-generated requests. The memory 202 may be communicatively coupled to the processor 203. The memory 202 stores instructions, executable by the processor 203, which, on execution, may cause the processor 203 to manage access to the data of the digital twin in the industrial system.

In an embodiment, the memory 202 may include computation data 204 and one or more modules 205. The one or more modules 205 may be configured to perform the steps of the present disclosure using the computation data 204, to manage access to the data of the digital twin in the industrial system. In an embodiment, each of the one or more modules 205 may be a hardware unit which may be outside the memory 202 and coupled with the access management system 104. As used herein, the term modules 205 refers to an Application Specific Integrated Circuit (ASIC), an electronic circuit, a Field-Programmable Gate Arrays (FPGA), Programmable System-on-Chip (PSoC), a combinational logic circuit, and/or other suitable components that provide described functionality. The one or more modules 205 when configured with the described functionality defined in the present disclosure will result in a novel hardware. Further, the I/O interface 201 is coupled with the processor 203 through which an input signal or/and an output signal is communicated. For example, the access management system 104 may communicate with the plurality of devices 102 via the I/O interface 201.

In one implementation, the modules 205 may include, for example, an input module 211, a state determination module 212, a matrix generation module 213, an access module 214, and other modules 215. It will be appreciated that such aforementioned modules 205 may be represented as a single module or a combination of different modules. In one implementation, the computation data 204 may include, for example, input data 206, state data 207, matrix data 208, access data 209, and auxiliary data 210.

In an embodiment, the input module 211 may be configured to receive the one or more datasets of the digital twin, from each of the plurality of devices 102 of the hierarchical system 101. The one or more datasets may comprise at least one of, data related to software components associated with the digital twin, data related to hardware components associated with the digital twin, operational data associated with the digital twin, data related to services associated with digital twin. The one or more datasets may include the operational data associated with the digital twin. In an example, the one or more datasets may include sensor data stored in a field device of the industrial system. For instance, the sensor data may be stored in a micro database associated with the field device. In such case, the input module 211 may receive the sensor data from the field device. The field device may comprise circuit breaker, motor, transformer, generator, and the like. The plurality of devices 102 implementing the digital twin stores the data related to the hardware components, the software components, and the services associated with the digital twin. For example, consider the digital twin corresponds to an industrial equipment such as a switchgear. The plurality of devices 102 stores the data related to hardware components, the software components, and the services associated with the industrial equipment. The data related to the software components may include device drivers, operating system, relational dependency mapping, file system management, communication protocol, and the like. The data related to the software components is generally referred to as a bill of software. An exemplary bill of software is shown in Table 1 below:

**Table 1**

| **Electronic device** | **Component ID** | **Version** | **Owner** | **End of life** |
|---|---|---|---|---|
| *Operation system* | 5a4bf8f39aef | RTXC 3.2 | External | 1-May-25 |
| *Communication stack* | 2663fab2e394 | Application Protocol Specification V1.1 | External | 1-Jan-24 |
| Cyber security component | 9bcca62b | TPM software version 1.2 | External | See contract |
| Applications | d552 | App1 Version 1.1 | Internal | NA |
| | 4870 | App2 Version 1.2 | Internal | NA |
| | 8768 | App3 Version 1.3 | Internal | 1-Dec-30 |
| | a650 | App4 Version 1.4 | Internal | 1-Dec-30 |

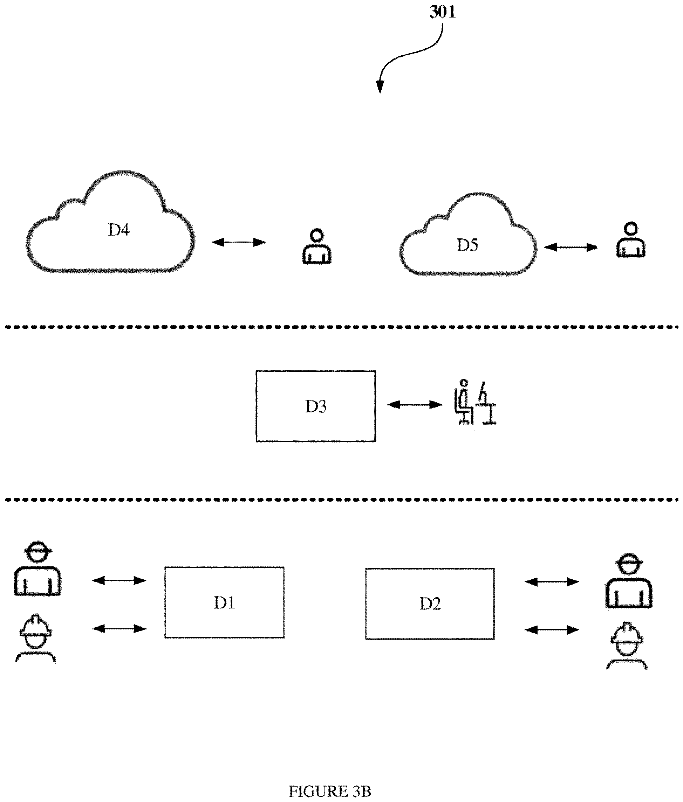

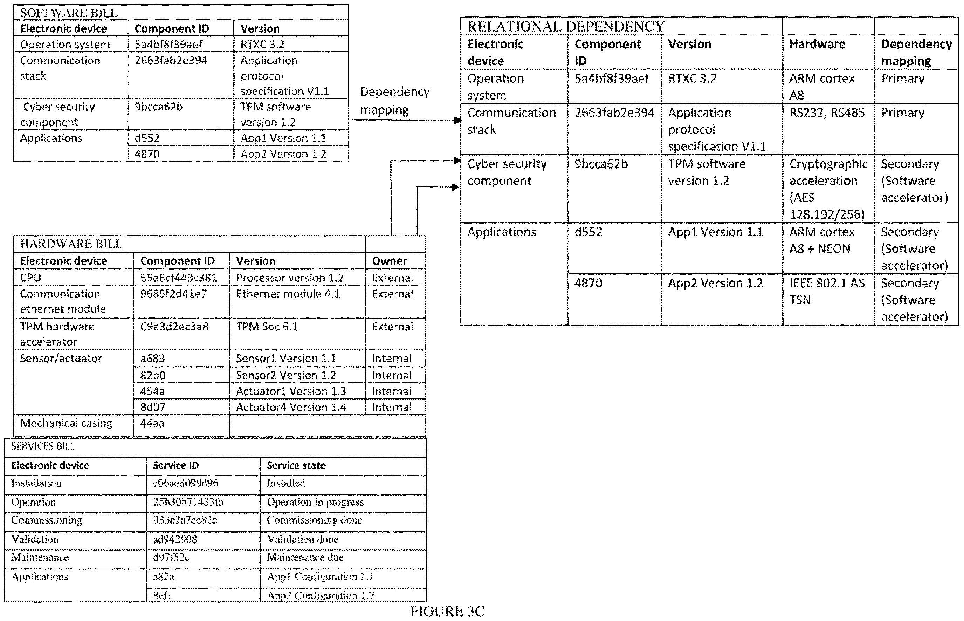

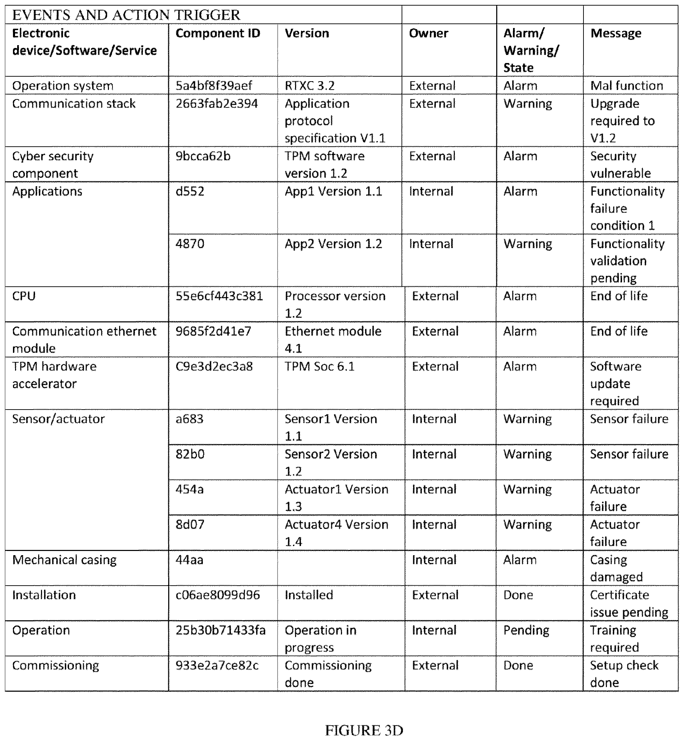

Similarly, the data related to the hardware components may include data related to processor, hardware drivers, hardware cards, and the like. The data related to the hardware components is generally referred to as a bill of hardware. Similarly, the plurality of devices 102 stores the data related to the services associated with the digital twin. For example, the services may include user services. Equipment of the industrial system may include various user configurations. The data related to the services may include various configurations associated with applications, communication, operation limit, user role, and the like. The data related to the services is generally referred to as Bill of Services (BoS). Further, the one or more datasets may include dependency mapping of Bill of Materials (BOM) of the hardware components and the software components as illustrated in **Figure 3C****.** **Figure 3D** illustrates events/notifications generated based on the dependency mapping. A person skilled in the art will appreciate that the one or more datasets may include any data other than the above-mentioned examples. In an example, the dependency mapping may be used in applications such as supply chain management of spare part inventory. In an example, an owner associated with the industrial system may decide replacement of components based on the dependency mapping. The owner is associated with life cycle management of the digital twin. For instance, the owner updates the state of the digital twin, defines the roles of the one or more users 103 to the digital twin during the life cycle management, updates the BoS, the BOM, and the like. Referring to example 301 illustrated in **Figure 3B****,** the plurality of devices 102 include devices D1-D5 of the hierarchical system 101. The hierarchical system 101 includes field-level, edge-level, and cloud-level. The field-level may include field devices 1 and 2 associated with a circuit breaker and a motor. The edge-level may include an edge device 3. The cloud-level may include devices 4 and 5 implemented in the cloud platform. The input module 211 may receive the one or more datasets from the devices D1-D5. Referring back to Figure 2, the one or more datasets may be stored as the input data 206 in the memory 202.

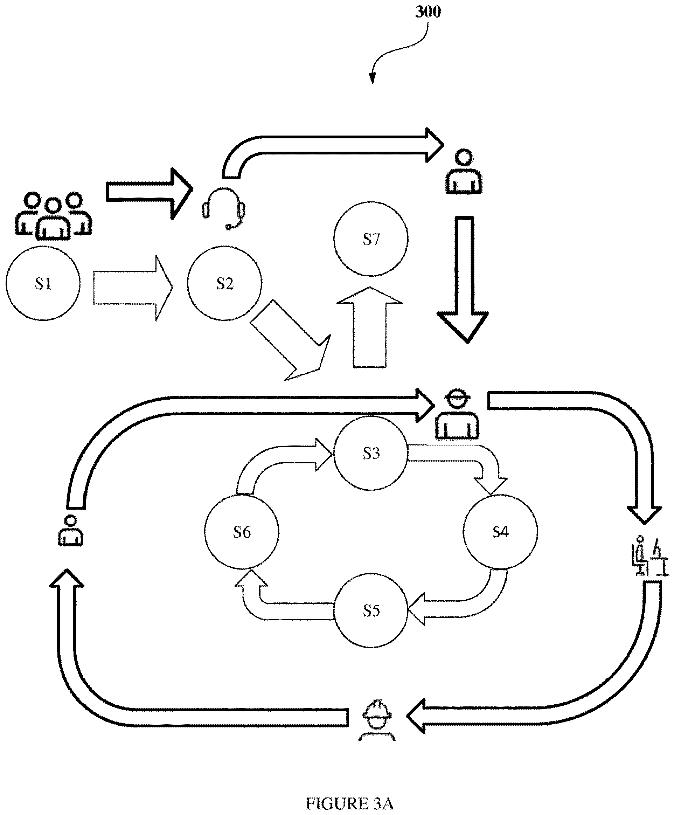

In an embodiment, the input module 211 may be further configured to receive information related to a role of each user of the one or more users 103 associated with each of the plurality of devices 102. The input module 211 may receive the information related to the role of the one or more users 103 from one or more sources. In an example, the one or more sources may include a database comprising the information related to the role of the one or more users 103 in an industrial system. In another example, the one or more sources may include an owner in the industrial system. The owner may be a user who defines the roles of the one or more users 103 in the industrial system. The role of the one or more users 103 may comprise roles such as, designer, productization team, commissioning engineer, validation engineer, operator, maintenance engineer, owner, and the like. Figure 3A illustrates these roles associated with different states of the digital twin. The bold lines illustrate workflow sequence of the digital twin. Referring back to Figure 2, in an embodiment, the information related to the role of the one or more users 103 may include the information related to tasks to be performed by corresponding user. For example, the owner may define that an operator may read and write the data of the motor, however an energy auditor may only read the data of the motor. In an embodiment, the information related to the role of the one or more users 103 may be updated. In such case, the input module 211 may receive updated information related to the role of the one or more users 103. In an example, the information related to the role of the one or more users 103 may include the data as "A commission engineer can only set up the motor and tune the motor speed for desired operation efficiency and stability. Factory operator can only switch on/off the motor but cannot tune the speed of motor. Factory manager can only see the desired efficiency of the motor or total energy consumption of the motor. But factory manager cannot switch on/off the motor. However, an external commission engineer cannot see the total energy consumed by the motor. Factory optimizer engineer can calculate desired speed of motor vs desired efficiency. Plan manager can recommend a desired speed of motor vs desired efficiency". The information may also include limits of data access. For example, the information may include that a user may access specific historic data or may access the data associated with a specific time period. The information related to the role of the one or more users 103 may be stored as the input data 206 in the memory 202.

In an embodiment, the state determination module 212 may be configured to receive the input data 206 from the input module 211. Further, the state determination module 212 may be configured to determine the state of the digital twin corresponding to each of the one or more datasets. Firstly, the state determination module 212 may obtain pre-defined state data. In an embodiment, the pre-defined state data may include training/historical datasets mapped with various states of the digital twin. The pre-defined state data may be stored in a database associated with the industrial system. The state determination module 212 may obtain the pre-defined state data from the database. The state of the digital twin may comprise at least one of, an under-development state, a productization state, a commissioning state, a validation state, an operation state, a maintenance state, an upgrade state, and an end-of-life state. The various states of the digital twin in an entire lifecycle of the digital twin are illustrated in **Figure 3A**. In Figure 3A, S1-S7 refer to a design state, a productization state, a commission state, a validation state, an operation state, a maintenance state, and an end-to-life state. Referring back to Figure 2, the state determination module 212 may map each of the one or more datasets with the pre-defined state data. In an embodiment, the state determination module 212 may map each of the one or more datasets with the pre-defined state data based on values, parameters, and the like present in corresponding dataset. The values may be associated electrical variables, such as current values, voltage values, and the like. The parameters may include electrical parameters, mechanical parameters, and the like. For example, a dataset may include values of speed of motor. A person skilled in the art will appreciate that the one or more datasets may include any parameters and variables other than the above-mentioned parameters and variables. The state determination module 212 may determine the state to be operational state. In another example, a dataset may include error data/ data related to faults. The state determination module 212 may determine the state to be maintenance data. A person skilled in the art will appreciate that any methods other than the above-mentioned method may be used to map each of the one or more datasets with the pre-defined state data. The state of the digital twin corresponding to each of the one or more datasets may be stored as the state data 207 in the memory 202.

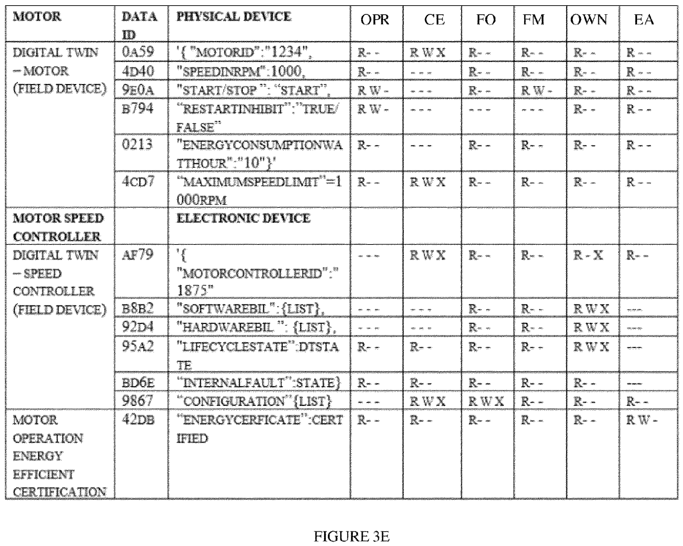

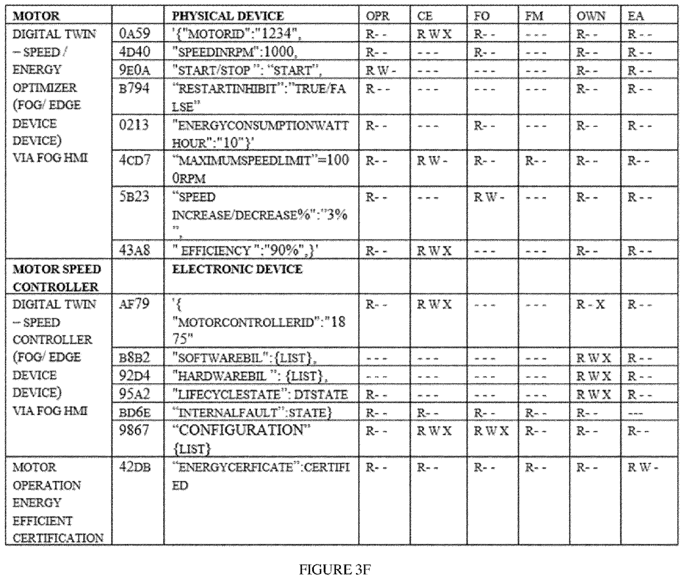

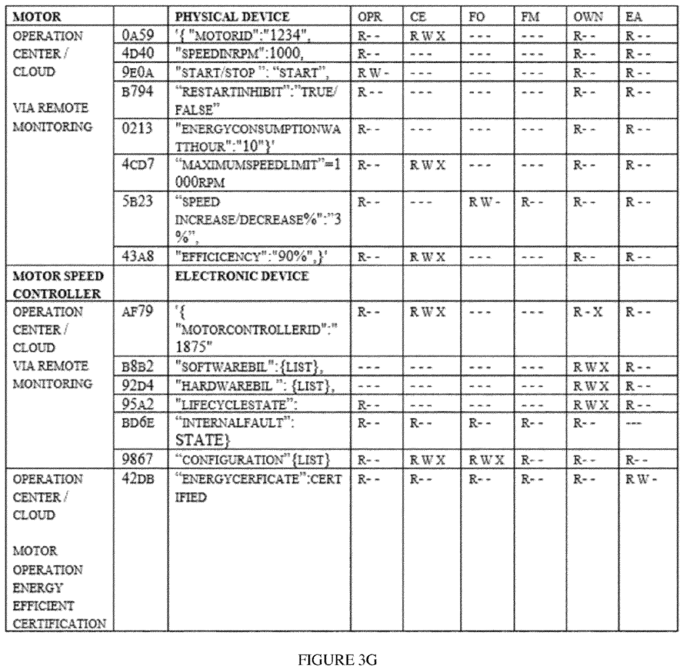

In an embodiment, the matrix generation module 213 may be configured to receive the input data 206 and the state data 207 from the input module 211 and the state determination module 212, respectively. Further, the matrix generation module 213 may be configured to map the state of the digital twin corresponding to each of the one or more datasets with the role of each of the one or more users 103. For example, a dataset may be associated with the operational state. The matrix generation module 213 may map the operator to the dataset. Further, the matrix generation module 213 may determine access rights to the one or more datasets based on the information related to the role of the one or more users 103. Figure 3B illustrates the one or more users 103 mapped to the one or more datasets associated with the plurality of devices 102. The access matrix may comprise data identifier (ID) to represent the one or more datasets. Referring to the above-stated example, the matrix generation module 213 may determine that the operator has access rights to read and write the data of the motor based on the information related to the role of the one or more users 103. Similarly, the matrix generation module 213 may determine that the energy auditor has access rights to read the data of the motor. The matrix generation module 213 may determine access rights to the one or more datasets based on the information related to the role of the one or more users 103. Then, the matrix generation module 213 may generate the access matrix indicating the one or more users 103 and corresponding access rights on the one or more datasets associated with each of the plurality of devices 102. An exemplary access matrix for a field device, an edge device, and a device associated with the cloud platform is illustrated in **Figures 3E****,** **3F****,** and **3G****,** respectively. As shown, the access matrix may indicate the digital twin, a physical device associated with the digital twin (in this case, a motor), data identifiers identifying the one or more datasets of the digital twin, the one or more users 103, and the access rights of the one or more users 103 to the one or more datasets. In Figure 3E-3G, 'OPR' refers to an operator, 'CE' refers to a commissioner engineer, 'FO' refers to a factory optimizer, 'FM' refers to a factory manager, 'OWN' refers to an owner, and `EA' refers to an energy auditor. As shown in Figure 3E, the commission engineer 'CE' can read, write, and delete the data associated with motor control. However, the energy auditor `EA' can only read the data associated with the motor control. As shown in Figure 3F, the commission engineer 'CE' can read the data associated with energy certificate. However, the energy auditor `EA' can read and write the data associated with the energy certificate. As shown in Figure 3G, the factory optimizer 'FO' can read and write the data associated with speed of the motor. However, the energy auditor `EA' can only read the data associated with the speed of the motor.

Referring back to Figure 2, the access matrix is stored in each of the plurality of devices 102. In an embodiment, the access matrix including the access rights of the one or more datasets of the hierarchical system 101 may be stored in a secure vault. In an embodiment, the access matrix corresponding to each of the plurality of devices 102 may be stored as a file. In an example, the access matrix may be stored in Trusted Platform Module (TPM) of each device of the plurality of devices 102. A person skilled in the art will appreciate that any other techniques may be used to store the access matrix. In an embodiment, the access matrix may be viewed by a user (for example, the owner). The access matrix may be stored as the access data 209 in the memory 202.

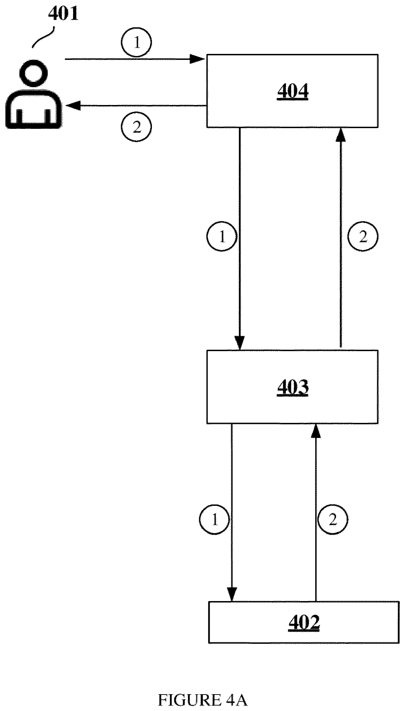

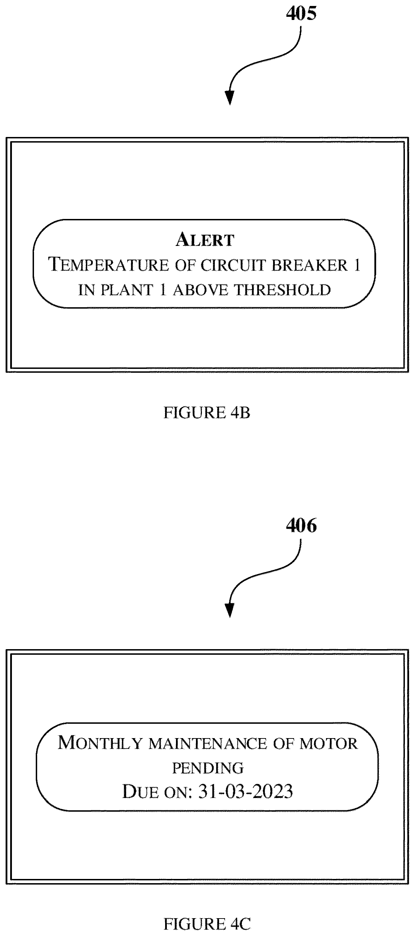

In an embodiment, the access module 214 may be configured to receive the access data 209 from the matrix generation module 213. Further, the access module 214 may be configured to manage the access to the one or more datasets by the one or more users 103 at each of the plurality of devices 102, based on the access matrix. The access module 214 may either provide the access or deny the access to the one or more datasets based on a request received from each of the one or more users 103 to access the one or more datasets. The request may include a subscription request from each of the one or more users 103 to access the one or more datasets. Referring to **Figure 4A****,** a user 401 may transmit the subscription request to access the one or more datasets associated with a device 404. The device 404 may be implemented in a cloud platform. The subscription request may be transmitted via a device 403 (for example, an edge device) to a device 402 (for example, a field device) which accepts the subscription request as shown as '1' in Figure 4A. Subsequently, the user 401 may receive the access to the one or more datasets as shown as '2' in Figure 4A. In an embodiment, the access module 214 may be configured to provide one or more notifications related to the state corresponding to a dataset of the one or more datasets, to the one or more users 103. **Figure 4B** illustrates an exemplary notification 405 related to an operational state of a circuit breaker. The user 401 may automatically receive system-generated notifications, upon successful subscription to the one or more datasets. In an embodiment, the access module 214 may be configured to display a status of one or more tasks associated with the state of the dataset, to the one or more users 103. The access module 214 may display the status on a user interface. **Figure 4C** illustrates an exemplary display 406 of status of a task related to maintenance state of a motor. In an embodiment, the one or more users 103 may access the one or mor datasets, receive the one or more notifications, and the status of the one or more tasks on remote devices such as user devices. For example, the user devices may include mobile applications to access the data of the digital twin.

The auxiliary data 210 may store data, including temporary data and temporary files, generated by the one or more modules 205 for performing the various functions of the access management system 104. The one or more modules 205 may also include the other modules 215 to perform various miscellaneous functionalities of the access management system 104. The auxiliary data 210 may be stored in the memory 202. It will be appreciated that the one or more modules 205 may be represented as a single module or a combination of different modules.

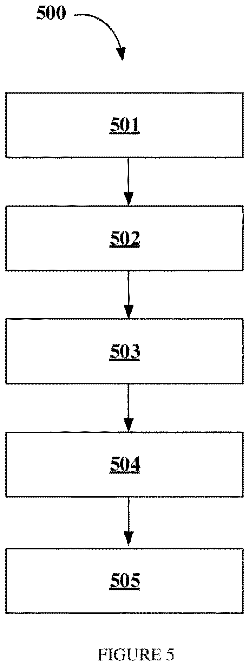

**Figure 5** shows an exemplary flow chart illustrating method steps for managing access to the data of the digital twin in the industrial system, in accordance with some embodiments of the present disclosure. As illustrated in Figure 5, the method 500 may comprise one or more steps. The method 500 may be described in the general context of computer executable instructions. Generally, computer executable instructions can include routines, programs, objects, components, data structures, procedures, modules, and functions, which perform particular functions or implement particular abstract data types.

The order in which the method 500 is described is not intended to be construed as a limitation, and any number of the described method blocks can be combined in any order to implement the method. Additionally, individual blocks may be deleted from the methods without departing from the scope of the subject matter described herein. Furthermore, the method can be implemented in any suitable hardware, software, firmware, or combination thereof.

At step 501, the access management system 104 receives the one or more datasets of the digital twin, from each of the plurality of devices 102 of the hierarchical system 101. The one or more datasets may comprise at least one of, data related to software components associated with the digital twin, data related to hardware components associated with the digital twin, operational data associated with the digital twin, data related to services associated with digital twin.

At step 502, the access management system 104 determines the state of the digital twin corresponding to each of the one or more datasets, based on the pre-defined state data. In an embodiment, the pre-defined state data may include training/historical datasets mapped with various states of the digital twin. The state of the digital twin may comprise at least one of, an under-development state, a productization state, a commissioning state, a validation state, an operation state, a maintenance state, an upgrade state, and an end-of-life state. In an embodiment, the state determination module 212 may map each of the one or more datasets with the pre-defined state data based on measurement values, parameters, and the like present in corresponding dataset. A person skilled in the art will appreciate that any methods other than the above-mentioned method may be used to map each of the one or more datasets with the pre-defined state data.

At step 503, the access management system 104 receives information related to the role of each user of the one or more users 103 associated with each of the plurality of devices 102. The access management system 104 may receive the information related to the role of the one or more users 103 from one or more sources. In an example, the one or more sources may include a database comprising the information related to the role of the one or more users 103 in an industrial system. In another example, the one or more sources may include an owner in the industrial system. The role of the one or more users 103 may comprise roles such as, designer, productization team, commissioning engineer, validation engineer, operator, maintenance engineer, owner, and the like.

At step 504, the access management system 104 generates the access matrix by mapping the state of the digital twin corresponding to each of the one or more datasets with the role of each of the one or more users 103. The access matrix may comprise data identifier (ID) to represent the one or more datasets. The access management system 104 may determine access rights to the one or more datasets based on the information related to the role of the one or more users 103. Then, the access management system 104 may generate the access matrix indicating the one or more users 103 and corresponding access rights on the one or more datasets associated with each of the plurality of devices 102.

At step 505, the access management system 104 manages the access to the one or more datasets by the one or more users 103 at each of the plurality of devices 102, based on the access matrix. The access management system 104 may either provide the access or deny the access to the one or more datasets based on a request received from each of the one or more users 103 to access the one or more datasets. The request may include a subscription request from each of the one or more users 103 to access the one or more datasets. In an embodiment, the access management system 104 may be configured to provide one or more notifications related to the state corresponding to a dataset of the one or more datasets, to the one or more users 103. In an embodiment, the access management system 104 may be configured to display a status of one or more tasks associated with the state of the dataset, to the one or more users 103.

### COMPUTER SYSTEM

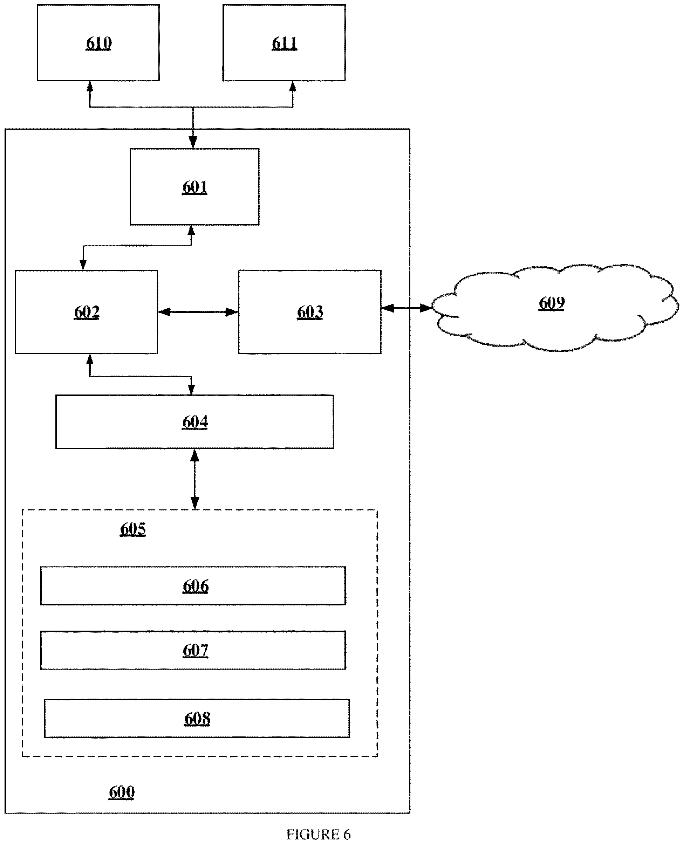

**Figure 6** illustrates a block diagram of an exemplary computer system 600 for implementing embodiments consistent with the present disclosure. In an embodiment, the computer system 600 may be used to implement the access management system 104. Thus, the computer system 600 may be used for managing access to the data of the digital twin in the industrial system. In an embodiment, the computer system 600 may be a separate entity communicating with the hierarchical system 101. In such case, the computer system 600 may communicate with the plurality of devices 102 over a communication network 609. In another embodiment, the computer system 600 may be implemented in a device from the plurality of devices 102 of the hierarchical system 101. In such case, the computer system 600 may communicates with other devices from the plurality of devices 102 over the communication network 609. The computer system 600 may comprise a Central Processing Unit 602 (also referred as "CPU" or "processor"). The processor 602 may comprise at least one data processor. The processor 602 may include specialized processing units such as integrated system (bus) controllers, memory management control units, floating point units, graphics processing units, digital signal processing units, etc.

The processor 602 may be disposed in communication with one or more input/output (I/O) devices (not shown) via I/O interface 601. The I/O interface 601 may employ communication protocols/methods such as, without limitation, audio, analog, digital, monoaural, RCA, stereo, IEEE (Institute of Electrical and Electronics Engineers) -1394, serial bus, universal serial bus (USB), infrared, PS/2, BNC, coaxial, component, composite, digital visual interface (DVI), high-definition multimedia interface (HDMI), Radio Frequency (RF) antennas, S-Video, VGA, IEEE 802.n /b/g/n/x, Bluetooth, cellular (e.g., code-division multiple access (CDMA), high-speed packet access (HSPA+), global system for mobile communications (GSM), long-term evolution (LTE), WiMax, or the like), etc.

Using the I/O interface 601, the computer system 600 may communicate with one or more I/O devices. For example, the input device 610 may be an antenna, keyboard, mouse, joystick, (infrared) remote control, camera, card reader, fax machine, dongle, biometric reader, microphone, touch screen, touchpad, trackball, stylus, scanner, storage device, transceiver, video device/source, sensors, etc. The output device 611 may be a printer, fax machine, video display (e.g., cathode ray tube (CRT), liquid crystal display (LCD), light-emitting diode (LED), plasma, Plasma display panel (PDP), Organic light-emitting diode display (OLED) or the like), audio speaker, etc.

The processor 602 may be disposed in communication with the communication network 609 via a network interface 603. The network interface 603 may communicate with the communication network 609. The network interface 603 may employ connection protocols including, without limitation, direct connect, Ethernet (e.g., twisted pair 10/100/1000 Base T), transmission control protocol/internet protocol (TCP/IP), token ring, IEEE 802.11a/b/g/n/x, etc. The communication network 609 may include, without limitation, a direct interconnection, local area network (LAN), wide area network (WAN), wireless network (e.g., using Wireless Application Protocol), the Internet, etc. The network interface 603 may employ connection protocols include, but not limited to, direct connect, Ethernet (e.g., twisted pair 10/100/1000 Base T), transmission control protocol/internet protocol (TCP/IP), token ring, IEEE 802.11a/b/g/n/x, Bluetooth mesh, Zigbee, etc.

The communication network 609 includes, but is not limited to, a direct interconnection, an e-commerce network, a peer to peer (P2P) network, local area network (LAN), wide area network (WAN), wireless network (e.g., using Wireless Application Protocol), the Internet, Wi-Fi, and such. The first network and the second network may either be a dedicated network or a shared network, which represents an association of the different types of networks that use a variety of protocols, for example, Hypertext Transfer Protocol (HTTP), Transmission Control Protocol/Internet Protocol (TCP/IP), Wireless Application Protocol (WAP), etc., to communicate with each other. Further, the first network and the second network may include a variety of network devices, including routers, bridges, servers, computing devices, storage devices, etc.

In some embodiments, the processor 602 may be disposed in communication with a memory 605 (e.g., RAM, ROM, etc. not shown in Figure 6) via a storage interface 604. The storage interface 604 may connect to memory 605 including, without limitation, memory drives, removable disc drives, etc., employing connection protocols such as serial advanced technology attachment (SATA), Integrated Drive Electronics (IDE), IEEE-1394, Universal Serial Bus (USB), fiber channel, Small Computer Systems Interface (SCSI), etc. The memory drives may further include a drum, magnetic disc drive, magneto-optical drive, optical drive, Redundant Array of Independent Discs (RAID), solid-state memory devices, solid-state drives, etc.

The memory 605 may store a collection of program or database components, including, without limitation, user interface 606, an operating system 607, web browser 608 etc. In some embodiments, computer system 600 may store user/application data, such as, the data, variables, records, etc., as described in this disclosure. Such databases may be implemented as fault-tolerant, relational, scalable, secure databases such as Oracle ^{®} or Sybase^{®}.

The operating system 607 may facilitate resource management and operation of the computer system 600. Examples of operating systems include, without limitation, APPLE MACINTOSH^{R} OS X, UNIX^{R}, UNIX-like system distributions (E.G., BERKELEY SOFTWARE DISTRIBUTION^{™} (BSD), FREEBSD^{™}, NETBSD^{™}, OPENBSD^{™}, etc.), LINUX DISTRIBUTIONS^{™} (E.G., RED HAT^{™}, UBUNTU^{™}, KUBUNTU^{™}, etc.), IBM^{™} OS/2, MICROSOFT^{™} WINDOWS^{™} (XP^{™}, VISTA^{™}/7/8, 10 etc.), APPLE^{R} IOS^{™}, GOOGLE^{R} ANDROID^{™}, BLACKBERRY^{R} OS, or the like.

In some embodiments, the computer system 600 may implement the web browser 608 stored program component. The web browser 608 may be a hypertext viewing application, for example MICROSOFT^{R} INTERNET EXPLORER^{™}, GOOGLE^{R} CHROME^{™0}, MOZILLA^{R} FIREFOX^{™}, APPLE^{R} SAFARI^{™}, etc. Secure web browsing may be provided using Secure Hypertext Transport Protocol (HTTPS), Secure Sockets Layer (SSL), Transport Layer Security (TLS), etc. Web browsers 608 may utilize facilities such as AJAX^{™}, DHTML^{™}, ADOBE^{R} FLASH^{™}, JAVASCRIPT^{™}, JAVA^{™}, Application Programming Interfaces (APIs), etc. In some embodiments, the computer system 600 may implement a mail server (not shown in Figure) stored program component. The mail server may be an Internet mail server such as Microsoft Exchange, or the like. The mail server may utilize facilities such as ASP^{™}, ACTIVEX^{™}, ANSI^{™} C++/C#, MICROSOFT^{R},.NET^{™}, CGI SCRIPTS^{™}, JAVA^{™}, JAVASCRIPT^{™}, PERL^{™}, PHP^{™}, PYTHON^{™}, WEBOBJECTS^{™}, etc. The mail server may utilize communication protocols such as Internet Message Access Protocol (IMAP), Messaging Application Programming Interface (MAPI), MICROSOFT^{R} exchange, Post Office Protocol (POP), Simple Mail Transfer Protocol (SMTP), or the like. In some embodiments, the computer system 600 may implement a mail client stored program component. The mail client (not shown in Figure) may be a mail viewing application, such as APPLE^{R} MAIL^{™}, MICROSOFT^{R} ENTOURAGE^{™}, MICROSOFT^{R} OUTLOOK^{™}, MOZILLA^{R} THUNDERBIRD^{™}, etc.

Furthermore, one or more computer-readable storage media may be utilized in implementing embodiments consistent with the present disclosure. A computer-readable storage medium refers to any type of physical memory on which information or data readable by a processor may be stored. Thus, a computer-readable storage medium may store instructions for execution by one or more processors, including instructions for causing the processor(s) to perform steps or stages consistent with the embodiments described herein. The term "computer-readable medium" should be understood to include tangible items and exclude carrier waves and transient signals, i.e., be non-transitory. Examples include Random Access Memory (RAM), Read-Only Memory (ROM), volatile memory, non-volatile memory, hard drives, Compact Disc Read-Only Memory (CD ROMs), Digital Video Disc (DVDs), flash drives, disks, and any other known physical storage media.

The present disclosure provides the access to the data of the digital twin to the users based on the role of the users, hence allowing only required users to access the data. This enhances security of the data of the digital twin. Also, a user activity log indicating access to the data of the digital twin by the users can be maintained. Further, the system provides notifications or task updates related to various states of the digital twin to relevant users based on the role. Hence, the present disclosure provides efficient management of tasks of the digital twin. Thus, the present disclosure provides simplified access management and efficient task management of the digital twin throughout the lifecycle of the digital twin. The present disclosure provides access management and task management tools to users to map states of the digital twin with roles of users in the industrial system, and accordingly manage the access to the data of the digital twin.

The terms "an embodiment", "embodiment", "embodiments", "the embodiment", "the embodiments", "one or more embodiments", "some embodiments", and "one embodiment" mean "one or more (but not all) embodiments of the invention(s)" unless expressly specified otherwise.

The terms "including", "comprising", "having" and variations thereof mean "including but not limited to", unless expressly specified otherwise.

The enumerated listing of items does not imply that any or all of the items are mutually exclusive, unless expressly specified otherwise. The terms "a", "an" and "the" mean "one or more", unless expressly specified otherwise.

A description of an embodiment with several components in communication with each other does not imply that all such components are required. On the contrary a variety of optional components are described to illustrate the wide variety of possible embodiments of the invention.

When a single device or article is described herein, it will be readily apparent that more than one device/article (whether or not they cooperate) may be used in place of a single device/article. Similarly, where more than one device or article is described herein (whether or not they cooperate), it will be readily apparent that a single device/article may be used in place of the more than one device or article or a different number of devices/articles may be used instead of the shown number of devices or programs. The functionality and/or the features of a device may be alternatively embodied by one or more other devices which are not explicitly described as having such functionality/features. Thus, other embodiments of the invention need not include the device itself.

The illustrated operations of Figure 5 shows certain events occurring in a certain order. In alternative embodiments, certain operations may be performed in a different order, modified, or removed. Moreover, steps may be added to the above described logic and still conform to the described embodiments. Further, operations described herein may occur sequentially or certain operations may be processed in parallel. Yet further, operations may be performed by a single processing unit or by distributed processing units.

Finally, the language used in the specification has been principally selected for readability and instructional purposes, and it may not have been selected to delineate or circumscribe the inventive subject matter. It is therefore intended that the scope of the invention be limited not by this detailed description, but rather by any claims that issue on an application based here on. Accordingly, the disclosure of the embodiments of the invention is intended to be illustrative, but not limiting, of the scope of the invention, which is set forth in the following claims.

While various aspects and embodiments have been disclosed herein, other aspects and embodiments will be apparent to those skilled in the art. The various aspects and embodiments disclosed herein are for purposes of illustration and are not intended to be limiting, with the true scope being indicated by the following claims.

### Referral Numerals:

| **Referral number** | **Description** |
|---|---|
| 100 | Exemplary environment |
| 101 | Hierarchical system |
| 102 | Plurality of devices |
| 103 | One or more users |
| 104 | Access management system |
| 200 | Detailed diagram |
| 201 | I/O interface |
| 202 | Memory |
| 203 | Processor |
| 204 | Computation data |
| 205 | Modules |
| 206 | Input data |
| 207 | State data |
| 208 | Matrix data |
| 209 | Access data |
| 210 | Auxiliary data |
| 211 | Input module |
| 212 | State determination module |
| 213 | Matrix generation module |
| 214 | Access module |
| 215 | Auxiliary modules |
| 600 | Computer system |
| 601 | I/O interface |
| 602 | Processor |
| 603 | Network interface |
| 604 | Storage interface |
| 605 | Memory |
| 606 | User interface |
| 607 | Operating system |
| 608 | Web browser |
| 609 | Communication network |
| 610 | Input device |
| 611 | Output device |

## Claims

1. A method of managing an access to data of a digital twin in an industrial system, the method comprising:
receiving, by a processor (203), one or more datasets of a digital twin, from each of a plurality of devices (102) of a hierarchical system (101) implementing the digital twin;
determining, by the processor (203), a state of the digital twin corresponding to each of the one or more datasets, by mapping each of the one or more datasets with pre-defined state data;
receiving, by the processor (203), information related to a role of each user of one or more users (103) associated with each of the plurality of devices (102), from one or more sources;
generating, by the processor (203), an access matrix indicating the one or more users (103) and corresponding access rights on the one or more datasets associated with each of the plurality of devices (102), by mapping the state of the digital twin corresponding to each of the one or more datasets with the role of each of the one or more users (103); and
managing, by the processor (203), an access to the one or more datasets by the one or more users (103) at each of the plurality of devices (102), based on the access matrix.

2. The method of claim 1, wherein the one or more datasets comprise at least one of, data related to software components associated with the digital twin, data related to hardware components associated with the digital twin, operational data associated with the digital twin, data related to services associated with digital twin.

3. The method of claim 1 or 2, wherein the state of the digital twin comprises at least one of, an under-development state, a productization state, a commissioning state, a validation state, an operation state, a maintenance state, an upgrade state, and an end-of-life state.

4. The method of one of the previous claims, wherein managing the access comprising either providing the access or denying the access to the one or more datasets based on a request received from each of the one or more users (103) to access the one or more datasets.

5. The method of claim 4, further comprising:
providing one or more notifications related to a state corresponding to a dataset of the one or more datasets, to the one or more users (103); and
displaying a status of one or more tasks associated with the state of the dataset, to the one or more users (103).

6. The method of one of the previous claims, wherein the access matrix is stored in each of the plurality of devices (102).

7. An access management system (104) for managing an access to data of a digital twin in an industrial system, the system comprises:
a processor (203);
a memory (202), wherein the memory (202) stores processor-executable instructions, which, on execution, causes the processor (203) to:
receive one or more datasets of a digital twin, from each of a plurality of devices (102) of a hierarchical system (101) implementing the digital twin;
determine a state of the digital twin corresponding to each of the one or more datasets, by mapping each of the one or more datasets with pre-defined state data;
receive information related to a role of each user of one or more users (103) associated with each of the plurality of devices (102), from one or more sources;
generate an access matrix indicating the one or more users (103) and corresponding access rights on the one or more datasets associated with each of the plurality of devices (102), by mapping the state of the digital twin corresponding to each of the one or more datasets with the role of each of the one or more users (103); and
manage an access to the one or more datasets by the one or more users (103) at each of the plurality of devices (102), based on the access matrix.

8. The access management system (104) of claim 7, wherein the one or more datasets comprise at least one of, data related to software components associated with the digital twin, data related to hardware components associated with the digital twin, operational data associated with the digital twin, data related to services associated with digital twin.

9. The access management system (104) of claim 7 or 8, wherein the state of the digital twin comprises at least one of, an under-development state, a productization state, a commissioning state, a validation state, an operation state, a maintenance state, an upgrade state, and an end-of-life state.

10. The access management system (104) of one of the claims 7-9, wherein the processor (203) manages the access by either providing the access or denying the access to the one or more datasets based on a request received from each of the one or more users (103) to access the one or more datasets.

11. The access management system (104) of claim 10, wherein the processor (203) is further configured to:
provide one or more notifications related to a state corresponding to a dataset of the one or more datasets, to the one or more users (103); and
display a status of one or more tasks associated with the state of the dataset, to the one or more users (103).

12. The access management system (104) of one of the claims 7 - 11, wherein the access matrix is stored in each of the plurality of devices (102).
